# EUROPÄISCHE PATENTSCHRIFT

(11) **EP 2 279 827 B1**
(45) Veröffentlichungstag und Bekanntmachung des Hinweises auf die Patenterteilung: **01.10.2014**
(21) Anmeldenummer: 10170021.9
(22) Anmeldetag: 19.07.2010
(51) Int. Cl.: B23P 15/32, B28D 1/14

(54) **Bohrer und Herstellungsverfahren**
Drill bit and method for its manufacture
Foret et son procédé de fabrication

(30) Priorität: 27.07.2009 DE 102009028020
(43) Veröffentlichungstag der Anmeldung: 02.02.2011
(73) Patentinhaber: HILTI Aktiengesellschaft, 9494 Schaan (LI)
(72) Erfinder: Glaser, Arno, 9490, Vaduz (LI); Bischof, Michael, 6900 Bregenz (AT); Moseley, Steven, 6820 Nenzig-Gurtis (AT)
(74) Vertreter: Hilti Aktiengesellschaft Corporate Intellectual Property

(56) Entgegenhaltungen:
- EP-A1- 0 714 719
- EP-A2- 1 260 338
- WO-A1-2008/088631
- JP-A- 2005 111 581

## Beschreibung

### GEBIET DER ERFINDUNG

Die vorliegende Erfindung betrifft einen Bohrer gemäß dem Oberbegriff des Anspruchs 1, vorzugsweise mit einem Vollkopf, der insbesondere für einen dreh-meisselnden Betrieb geeignet ist. Ferner betrifft die Erfindung ein Herstellungsverfahren für einen Bohrer gemäß dem Oberbegriff des Anspruchs 10. Ein solcher Bohrer und ein solches Herstellungsverfahren sind aus EP 1 260 338 A2 bekannt.

Bohrer für das Baugewerbe werden mit Schneiden aus Hartmetall gefertigt. Das Hartmetall, typischerweise ein gesintertes Wolframkarbid, ist ausreichend hart, um Gestein und auch Stahlarmierungen zu trennen. Bei einem Vollkopfbohrer ist der gesamte Bohrkopf aus dem Hartmetall gefertigt. Der Bohrkopf wird an einer Fügezone mit einer Wendel verbunden. Die Fügezone stellt eine Schwachstelle bei der Übertragung von Kräften von der Wendel auf den Bohrkopf und auch von dem Bohrkopf auf die Wendel dar. Insbesondere können die Bohrköpfe von der Wendel abgeschert oder abgedreht werden, wenn beim Bohren der Bohrkopf sich an einer Armierung festklemmt.

### OFFENBARUNG DER ERFINDUNG

Die Aufgabe der Erfindung besteht in einer stabileren Befestigung des Vollkopfs an einem Schaft eines Bohrers. Diese Aufgabe wird durch einen Bohrer gemäß dem Anspruch 1 und ein Herstellungsverfahren gemäß dem Anspruch 10 gelöst.

Der erfindungsgemäße Bohrer weist einen Bohrkopf aus Hartmetall und einen Schaft oder ein Kopplungsstück aus einer gesinterten Eisenlegierung auf. Das gesinterte Hartmetall ist mit der gesinterten Eisenlegierung durch einen Sinterprozess materialschlüssig verbunden. Die gesinterte Fügenaht weist im Gegensatz zu einer Schweißnaht keinen aufgeschmolzenen Bereich auf. Im Bereich der Fügenaht diffundieren das Hartmetall, z.B. Wolframkarbid, und die Eisenlegierung ineinander. Hierdurch ergibt sich ein Materialschluss. Die gesinterte Eisenlegierung des Schafts oder Kopplungsstücks weist typischerweise eine Restporosität auf, welche zu einer geringeren Dichte der gesinterten Eisenlegierung gegenüber dem gleichen Material aus der Schmelze aufweist. Der Unterschied kann beispielsweise etwa 1 Prozent bis 5 Prozent der Dichte betragen.

Eine Ausgestaltung sieht vor, dass der Schaft oder das Kopplungsstück eine Vertiefung aufweist, in der der Bohrkopf teilweise eingesetzt ist. Der Bohrkopf ist mittels thermomechanischer Spannungen in der Vertiefung geklemmt. Das Hartmetall kann einen im Mittel geringeren Wärmeausdehnungskoeffizienten über die Temperaturen des Sinterns als die Eisenlegierung um die Vertiefung des Grundkörpers oder Kopplungsstücks aufweisen. Die thermomechanischen Spannungen entstehen, wenn der Bohrer nach seinem Herstellungsverfahren mit erhöhten Temperaturen abkühlt.

Eine Ausgestaltung sieht vor, dass die Eisenlegierung wenigstens 45 Gew-% Eisen, vorzugsweise wenigstens 60 Gew-% enthält. Der hohe Eisenanteil gewährt eine für den Schaft ausreichende Duktilität oder bei der vorzugsweisen Verwendung eines Kopplungsstücks, des Vermögen auf einen Schaft auf Stahl aufgeschweißt zu werden.

Eine Ausgestaltung sieht vor, dass der Bohrkopf wenigstens einen Zapfen an einer Unterseite des Bohrkopfs aufweist, der in die Vertiefung eingesetzt ist.

Eine Ausgestaltung sieht vor, dass der Bohrkopf durch eine Schneidkante gebildet ist. Eine andere Ausgestaltung sieht vor, dass der Bohrkopf wenigstens zwei zusammenhängende Schneidkanten aufweist.

Das erfindungsgemäße Herstellungsverfahren für einen Bohrer sieht folgende Schritte vor: Erzeugen eines gesinterten Bohrkopfs aus Hartmetall; Erzeugen eines Grünlings eines Schafts oder eines Kopplungsstücks mit einer Fügezone; und Sintern des Grünlings des Schafts oder des Kopplungsstücks, wobei der Bohrkopf den Grünling an der Fügezone berührt, z.B. in eine Vertiefung im Bereich der Fügezone des Grünlings eingesetzt ist.

Eine Ausgestaltung sieht vor, dass der Grünling des Schafts oder Kopplungsstücks durch Pressen oder ein Spritzgussverfahren erzeugt wird.

Eine Ausgestaltung sieht vor, dass das Kopplungsstücks mit einem Schaft verlötet oder verschweißt wird.

Eine Ausgestaltung sieht vor, dass Hartmetall Wolframkarbid und wenigstens ein Metall aus der Gruppe von Kobalt, Nickel, Eisen, Chrom oder Molybdän enthält.

Eine Ausgestaltung sieht vor, dass die Eisenlegierung zwischen 25 Gew-% und 55 Gew-% Nickel enthält. Diese Eisennickellegierungen zeigen eine besonders gute Fügeeigenschaft durch das Sintern. Es wird vermutet, dass dies mit deren geringen, dem Hartmetall vergleichbaren Wärmeausdehnungskoeffizienten zusammenhängt.

Eine Ausgestaltung sieht vor, dass die Eisenlegierung bis zu 20 Gew-% eines oder mehrere der Elemente aus der Gruppe Kobalt, Chrom und Titan enthält.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrer;
Fig. 2 einen Bohrkopf des Bohrers von Fig. 1 und
Fig. 3 ein Kopplungsstück des Bohrers von Fig. 1.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

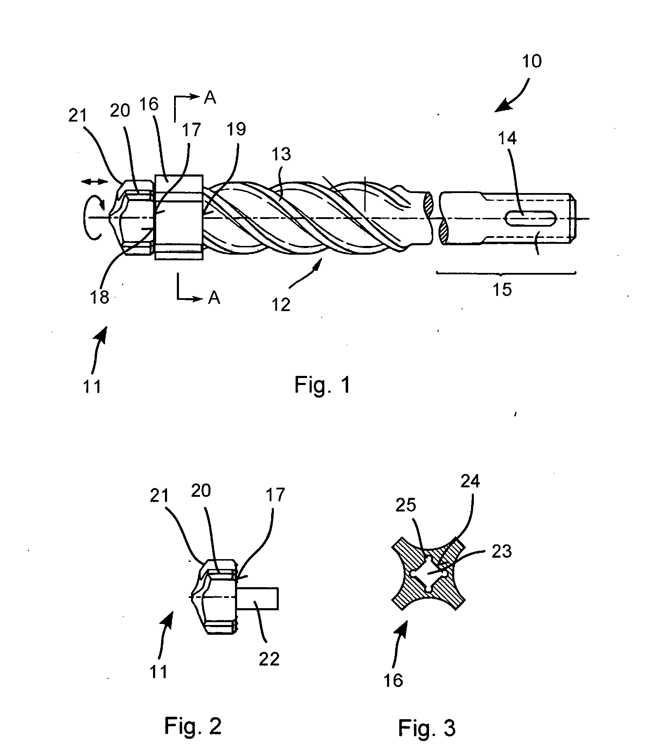

Fig. 1 zeigt eine Ausführungsform eines Bohrers 10, der insbesondere für einen Meißelbohrenden Einsatz geeignet ist. Der Bohrer 10 weist einen Bohrkopf 11 und einen Schaft 12 auf. Der Schaft 12 ist im wesentlichen zylindrisch und kann mit einer Wendel 13 und mit Nuten 14 im Bereich eines Einsteckendes 15 versehen sein.

Der Bohrkopf 11 ist an dem Schaft 12 über ein Kopplungsstück 16 befestigt. Der Bohrkopf 11 ist mit seiner Unterseite 17 durch eine Diffusionszone, elche durch einen Sinterprozess hergestellt ist, materialschlüssig mit einer Seite 18 des Kopplungsstücks 16 verbunden. Zusätzlich kann der Bohrkopf 11 mit dem Kopplungsstück 16 thermomechanisch kraft- und formschlüssig verbunden sein. Der Schaft 12 ist mit einer anderen Seite 19 des Kopplungsstücks 16 materialschlüssig verbunden, vorzugsweise verlötet oder verschweißt.

Fig. 2 zeigt den Bohrkopf 11 ohne die anderen Elemente des Bohrers 10. Der beispielhafte Bohrkopf 11 ist mit zwei Schneidkanten 20, 21 versehen. Die beiden Schneidkanten 20, 21 kreuzen sich unter einem Winkel im Bereich zwischen 60° und 90°. An der Unterseite 17 des Bohrkopfs 11 kann beispielsweise ein Zapfen 22 oder ein anderes vorspringendes Element hervorstehen.

Der Bohrkopf 11 ist in der Form eines Vollkopfs hergestellt. Der gesamte Bohrkopf 11 mit den Schneidkanten 20, 21 und dem Zapfen 22 ist ein zusammenhängendes Element aus einem Material, nämlich Hartmetall. Das Hartmetall kann als Hartstoffphase Materialien aus der Klasse gesinterter Wolframkarbide enthalten. Das Wolframkarbid hat einen Anteil von wenigstens 70% des gesamten Hartmetalls. Ein oder mehrere Karbide aus der Gruppe z.B. Titankarbid, Vanadiumkarbid, Tantalkarbid, Niobkarbid, Tantalniobkarbid, Molibdänkarbid, Chromkarbid, Zirkoniumkarbid und Hafniumkarbid können dem Wolframkarbid zugemischt werden. Das Wolframkarbid liegt als Körner, mit beispielsweise einem Durchmesser im Bereich von 0,4 bis 15 µm, z.B. vorzugsweise größer als 0,8 µm und/oder geringer als 10 µm, in einer Matrix aus einem Bindermaterial aus beispielsweise Kobalt, Nickel vor. Die Hartstoffphase hat einen Anteil von 70% bis 98%, vorzugsweise 80% bis 98% an der gesamten Mischung. Das Bindermaterial ist vorzugsweise mit einem Anteil zwischen 2% und 30%, vorzugsweise 5% bis 20% zugemischt. Die Verhältnisse der Materialmengen sind in Gewichtsprozent angegeben.

Fig. 3 zeigt im Schnitt A-A von Fig. 1 das Kopplungsstück 16. Der Querschnitt des Kopplungsstücks 16 stimmt vorzugsweise mit der Form der Unterseite 17 des Bohrkopfs 11 überein. Das Kopplungsstück 16 weist eine Vertiefung 23 zur formschlüssigen Aufnahme des Zapfens 22 auf. Der Querschnitt der Vertiefung 23 ist vorzugsweise gleich dem Querschnitt des Zapfens 22. Die Vertiefung 23 kann wie dargestellt einen quadratischen Querschnitt aufweisen. Vorzugsweise sind die Seitenflächen 24 der Vertiefung 23 parallel zu den Schneidkanten 20, 21 ausgerichtet. Die Seitenflächen 24 können zwischen 20% und 50% so breit wie die Schneidkanten 20, 21 sein. Die axial verlaufenden Kanten 25 der Vertiefung sind vorzugsweise abgerundet.

Das Kopplungsstück 16 ist vorzugsweise aus einer sinterfähigen Eisenlegierung. Ein Beispiel einer sinterbaren Eisenlegierung enthält zwischen 5% und 55% Nickel und wenigstens 40% Eisen. Die Zusammensetzung der Eisenlegierung des Kopplungsstücks 16 ist so gewählt, dass der Wärmeausdehnungskoeffizient der Eisenlegierung größer als der Wärmeausdehnungskoeffizient des Hartmetalls des Bohrkopfs 11 ist.

In einer Ausführungsform werden Eisenlegierungen mit einem geringen Wärmeausdehnungskoeffizienten bevorzugt. Beispiele solcher Legierungen sind Eisennickellegierungen mit einem hohen Nickelanteil zwischen 32 % bis 55 %. Anstelle von Nickel können auch Eisenlegierungen, der ingesamt eines oder mehrer der Elemente aus der Gruppe von Nickel, Kobalt, Chrom und Titan mit 25% bis 60% zugemischt sind, verwendet werden, wobei der Kobalt, Chrom und Titan ingesamt einen Anteil von maximal 35% haben. Ein oder mehrere Elemente aus der Gruppe Niob, Vanadium, Wolfram, Molbydän, Silizium und Aluminium können zum Härten mit einem Gesamtanteil von bis zu 15% zugemischt sein. Weitere Legierungszusätze, z.B. Mangan, Kohlenstoff, Bor und Selen, sind mit einem Gesamtanteil von höchstens 2% zugemischt. Der verbleibende Anteil ist Eisen.

Eine erste Eisenlegierung enthält 32% bis 52% Nickel, höchstens 2% andere Legierungszusätze und sonst Eisen. Eine zweite Eisenlegierung kann einen geringeren Nickelanteil z.B. 25% bis 52% Nickel aufweisen, wobei zusätzlich zwischen 2% und 10% Chrom, bis 5% Titan zugemischt sind, der verbleibende Anteil ist Eisen. Eine dritte Eisenlegierung enthält 27% bis 34% Nickel, höchstens 20% Chrom und sonst Eisen. Eine vierte Eisenlegierung enthält 27% bis 46% Nickel, 12% bis 16% Chrom, höchstens 8% weitere Legierungszusätze und sonst Eisen. Der Eisenanteil jeder Eisenlegierung beträgt wenigstens 46%.

Der Schaft 12 ist aus Stahl hergestellt. Der Stahl ist vorzugsweise unveredelt oder niederveredelt, das heißt Zusätze zu dem Stahl sind mit jeweiligen Anteilen von weniger als 5% zugemischt, insbesondere weist der Stahl einen Nickelanteil von weniger als 2% auf.

Das Kopplungsstück 16 aus der Eisenlegierung ist auf dem Schaft 12 aus Stahl vorzugsweise aufgeschweißt oder aufgelötet. Eine Fügezone mit hoher Qualität wird durch den hohen Eisenanteil in dem Kopplungsstück 16 gewährleistet.

Der Bohrkopf 11 wird durch ein pulvermetallurgisches Verfahren hergestellt. Granulat eines Hartmetalls, z.B. Wolframkarbid, vermischt mit einem metallischen Bindermaterial, z.B. Kobalt, Nickel, Eisen, Chrom, Molybdän, und einer organischen Matrix werden in Form gepresst. Alternativ kann das Gemisch in eine Form gespritzt werden. Die organische Matrix wird herausgelöst. In diesem Stadium wird das Produkt Grünling genannt. Der Grünling des Bohrkopfs 11 hat im Wesentlichen die Form des späteren Bohrkopfs 11. Während einer Wärmebehandlung, dem Sintern, mit Temperaturen von beispielsweise mehr als 900°C schließen sich die Zwischenräume, die aufgrund der herausgelösten organischen Matrix zurückgeblieben sind. Der Grünling schwindet dabei weitgehend isotrop.

Das Kopplungsstück 16 wird ebenfalls durch ein pulvermetallurgisches Verfahren hergestellt. Die Eisenlegierung wird als Granulat in einer organischen Matrix in Form gepresst. Alternativ kann das Gemisch in eine Form gespritzt werden. Die organische Matrix wird nachfolgend herausgelöst, um den Grünling des Kopplungsstücks 16 herzustellen.

Auf den Grünling des Kopplungsstücks 16 wird der gesinterte Bohrkopf 11 aufgesetzt. Der Zapfen 22 wird dabei in die Vertiefung 23 eingesetzt. Anschließend wird der Grünling des Kopplungsstücks 16 gesintert. Das Sintern der Eisenlegierung erfolgt bei hohen Temperaturen, z.B. zwischen 900°C und 1300°C. Während des Sinterns schwindet der Grünling des Kopplungsstücks 16, wobei sich die Hohlräume zurückgelassen durch die herausgelöste organische Matrix schließen. Das gesinterte Kopplungsstück 16 liegt nun vorzugsweise formschlüssig an dem gesinterten Bohrkopf 11 an. Während des Abkühlens von der hohen Temperatur für das Sintern schrumpfen der Bohrkopf 11 und das Kopplungsstück 16 entsprechend ihren Wärmeausdehnungskoeffizienten. Der im Mittel höhere Wärmeausdehnungskoeffizient des Kopplungsstücks 16 bewirkt nun, dass sich das Kopplungsstück 16 stärker als der Bohrkopf 11 zusammenzieht. Der Zapfen 22 wird hierdurch in der Vertiefung des Kopplungsstücks thermomechanisch eingeklemmt.

## Patentansprüche

1. Bohrer (10), der einen Bohrkopf (11) aus Hartmetall und einen Schaft (12) oder ein Kopplungsstück (16) aus einer gesinterten Eisenlegierung aufweist, **dadurch gekennzeichnet, dass** das Hartmetall mit der gesinterten Eisenlegierung durch einen Sinterprozess materialschlüssig verbunden ist.

2. Bohrer nach Anspruch 1, **dadurch gekennzeichnet, dass** der Schaft (12) oder das Kopplungsstück (16) eine Vertiefung (23) aufweist, in der der Bohrkopf (11) teilweise eingesetzt ist, und der Bohrkopf (11) mittels thermomechanischer Spannungen in der Vertiefung (23) geklemmt ist.

3. Bohrer nach einem der vorhergehenden Ansprüche, **dadurch gekennzeichnet, dass** das Hartmetall Wolframkarbid und wenigstens ein Metall aus der Gruppe von Kobalt, Nickel, Eisen, Chrom oder Molybdän enthält.

4. Bohrer nach einem der vorhergehenden Ansprüche, **dadurch gekennzeichnet, dass** die gesinterte Eisenlegierung wenigstens 45 Gew-% Eisen enthält.

5. Bohrer nach Anspruch 4, **dadurch gekennzeichnet, dass** die Eisenlegierung zwischen 25 Gew-% und 55 Gew-% Nickel enthält.

6. Bohrer nach Anspruch 4 oder 5, **dadurch gekennzeichnet, dass** die Eisenlegierung bis zu 20 Gew-% eines oder mehrere der Elemente aus der Gruppe Kobalt, Chrom und Titan enthält.

7. Bohrer nach einem der vorhergehenden Ansprüche, **dadurch gekennzeichnet, dass** der Bohrkopf (11) wenigstens einen Zapfen (22) an einer Unterseite (17) des Bohrkopfs (11) aufweist und der Zapfen (22) in die Vertiefung (23) eingesetzt ist.

8. Bohrer nach einem der vorhergehenden Ansprüche, **dadurch gekennzeichnet, dass** der Bohrkopf (11) durch wenigstens eine Schneidkante gebildet ist.

9. Bohrer nach einem der vorhergehenden Ansprüche 1 bis 7, **dadurch gekennzeichnet, dass** der Bohrkopf (11) wenigstens zwei zusammenhängende Schneidkanten (20, 21) aufweist.

10. Herstellungsverfahren für einen Bohrer mit den Schritten:
Erzeugen eines vorgesinterten Bohrkopfs aus Hartmetall;
Erzeugen eines Grünlings eines Schafts oder eines Kopplungsstücks mit einer Fügezone;
**gekennzeichnet durch** den Schritt:
Sintern des Grünlings des Schafts oder des Kopplungsstücks, wobei der vorgesinterte Bohrkopf an dem Grünling des Schafts oder des Kopplungsstücks anliegt.

11. Herstellungsverfahren nach Anspruch 10, **dadurch gekennzeichnet, dass** der Grünling des Schafts oder Kopplungsstücks durch Pressen oder ein Spritzgussverfahren erzeugt wird.

12. Herstellungsverfahren nach Anspruch 10 oder 11, **dadurch gekennzeichnet, dass** der das Kopplungsstücks mit einem Schaft verlötet oder verschweißt wird.

13. Herstellungsverfahren nach einem Ansprüche 10 bis 12, **dadurch gekennzeichnet, dass** das Hartmetall Wolframkarbid und wenigstens ein Metall aus der Gruppe von Kobalt, Nickel, Eisen, Chrom oder Molybdän enthält.

14. Herstellungsverfahren nach einem der Ansprüche 10 bis 13, **dadurch gekennzeichnet, dass** die Eisenlegierung zwischen 25 Gew-% und 55 Gew-% Nickel enthält.

15. Herstellungsverfahren nach einem der Ansprüche 10 bis 14, **dadurch gekennzeichnet, dass** die Eisenlegierung bis zu 20 Gew-% eines oder mehrere der Elemente aus der Gruppe Kobalt, Chrom und Titan enthält.

## Claims

1. Drill (10) comprising a drill head (11) made of hard metal and a shank (12) or a coupling piece (16) made of a sintered iron alloy, **characterised in that** the hard metal is joined to the sintered iron alloy by a material bond by means of a sintering process.

2. Drill according to claim 1, **characterised in that** the shank (12) or the coupling piece (16) comprises a depression (23) in which the drill head (11) is partially inserted and the drill head (11) is clamped in the depression (23) by means of thermomechanical tension.

3. Drill according to one of the preceding claims, **characterised in that** the hard metal is tungsten carbide and contains at least one metal from the group consisting of cobalt, nickel, iron, chromium or molybdenum.

4. Drill according to one of the preceding claims, **characterised in that** the sintered iron ally contains at least 45 % by weight of iron.

5. Drill according to claim 4, **characterised in that** the iron alloy contains between 25 % by weight and 55 % by weight of nickel.

6. Drill according to claim 4 or claim 5, **characterised in that** the iron alloy contains up to 20 % by weight of one or more of the elements from the group consisting of cobalt, chromium and titanium.

7. Drill according to one of the preceding claims, **characterised in that** the drill head (11) comprises at least one journal (22) on the underside (17) of the drill head (11) and the journal (22) is inserted into the depression (23).

8. Drill according to one of the preceding claims, **characterised in that** the drill head (11) is formed by at least one cutting edge.

9. Drill according to one of the preceding claims 1 to 7, **characterised in that** the drill head (11) comprises at least two contiguous cutting edges (20, 21).

10. Method for the manufacture of a drill comprising the steps:
producing a pre-sintered drill head made of hard metal and
producing a preform for a shank or a coupling piece having a joining zone,
**characterised by** the step:
sintering the preform for the shank or the coupling piece, wherein the pre-sintered drill head bears against the preform for the shank or the coupling piece.

11. Manufacturing method according to claim 10, **characterised in that** the preform for the shank or coupling piece is produced by compression moulding or injection moulding.

12. Manufacturing method according to claim 10 or claim 11, **characterised in that** the coupling piece is soldered or welded to a shank.

13. Manufacturing method according to one of claims 10 to 12, **characterised in that** the hard metal is tungsten carbide and contains at least one metal from the group consisting of cobalt, nickel, iron, chromimn or molybdenum.

14. Manufacturing method according to one of claims 10 to 13, **characterised in that** the iron alloy contains between 25 % by weight and 55 % by weight of nickel.

15. Manufacturing method according to one of claims 10 to 14, **characterised in that** the iron alloy contains up to 20 % by weight of one or more of the elements from the group consisting of cobalt, chromium and titanium.

## Revendications

1. Foret (10) comportant une tête de foret (11) en métal dur et une tige (12) ou une pièce de couplage (16) en un alliage de fer fritté, **caractérisé en ce que** le métal dur est directement assemblé à l'alliage de fer fritté par un procédé de frittage de matière.

2. Foret selon la revendication 1, **caractérisé en ce que** la tige (12) ou la pièce de couplage (16) comporte un évidement (23) dans lequel la tête de foret (11) est partiellement insérée, et la tête de foret est serrée dans l'évidement (23) au moyen de tensions thermomécaniques.

3. Foret selon l'une des revendications précédentes, **caractérisé en ce que** le métal dur contient du carbure de tungstène et au moins un métal parmi le groupe constitué du cobalt, du nickel, du fer, du chrome ou du molybdène.

4. Foret selon l'une des revendications précédentes, **caractérisé en ce que** l'alliage de fer fritté contient au moins 45 % en poids de fer.

5. Foret selon la revendication 4, **caractérisé en ce que** l'alliage de fer contient entre 25 % en poids et 55 % en poids de nickel.

6. Foret selon la revendication 4 ou 5, **caractérisé en ce que** l'alliage de fer contient jusqu'à 20 % en poids d'un ou plusieurs des éléments du groupe constitué du cobalt, du chrome et du titane.

7. Foret selon l'une des revendications précédentes, **caractérisé en ce que** la tête de foret (11) comporte au moins un tourillon (22) sur un côté inférieur (17) de la tête de foret (11) et le tourillon (22) est inséré dans l'évidement (23).

8. Foret selon l'une des revendications précédentes, **caractérisé en ce que** la tête de foret (11) est formée par au moins une arête de coupe.

9. Foret selon l'une des revendications 1 à 7 précédentes, **caractérisé en ce que** la tête de foret (11) comporte au moins deux arêtes de coupe (20, 21) contigües.

10. Procédé de fabrication d'un foret comportant les étapes consistant à :
produire une tête de foret pré-frittée en métal dur,
produire une ébauche d'une tige ou d'une pièce de couplage ayant une zone d'assemblage, **caractérisé en ce qu'**il comporte l'étape consistant à :
fritter l'ébauche de la tige ou de la pièce de couplage, la tête de foret pré-frittée étant en contact avec l'ébauche de la tige ou de la pièce de couplage.

11. Procédé de fabrication selon la revendication 10, **caractérisé en ce que** l'ébauche de la tige ou de la pièce de couplage est produite par pression ou par un procédé de moulage par injection.

12. Procédé de fabrication selon la revendication 10 ou 11, **caractérisé en ce que** la pièce de couplage est brasée ou soudée à une tige.

13. Procédé de fabrication selon l'une des revendications 10 à 12, **caractérisé en ce que** le métal dur contient du carbure de tungstène et au moins un métal du groupe constitué du cobalt, du nickel, du fer, du chrome ou du molybdène.

14. Procédé de fabrication selon l'une des revendications 10 à 13, **caractérisé en ce que** l'alliage de fer contient entre 25 % en poids et 55 % en poids de nickel.

15. Procédé de fabrication selon l'une des revendications 10 à 14, **caractérisé en ce que** l'alliage de fer contient jusqu'à 20 % en poids d'un ou plusieurs des éléments du groupe constitué du cobalt, du chrome et du titane.
